# EUROPÄISCHE PATENTANMELDUNG

(11) **EP 0 899 156 A2**
(43) Veröffentlichungstag der Anmeldung: **03.03.1999**
(21) Anmeldenummer: 98116152.4
(22) Anmeldetag: 27.08.1998
(51) Int. Cl.: B60Q 1/115

(54) **Vorrichtung zur statischen automatischen Leuchtweitenregulierung für Kraftfahrzeuge**

(30) Priorität: 29.08.1997 DE 19737710
(71) Anmelder: ROBERT BOSCH GMBH, 70442 Stuttgart (DE)
(72) Erfinder: Gorille, Ingo, 71739 Oberriexingen (DE); Kormanyos, Chris, 72764 Reutlingen (DE)

(57) **Zusammenfassung**

Die Erfindung betrifft eine Vorrichtung zur statischen automatischen Leuchtweitenregulierung für Kraftfahrzeuge, mit einer Steuereinrichtung (9) zur Ansteuerung mindestens einer Leuchtmittelverstelleinrichtung (4), die mit zwei als Niveaugeber (7,8) ausgebildeten Achssensoren und einer eine Fahrbewegung erfassenden Einheit (15) gekoppelt ist, wobei jeweils ein Niveaugeber (7,8) einer Vorder- beziehungsweise Hinterachse des Kraftfahrzeugs zugeordnet ist, die sich dadurch auszeichnet, daß die die Fahrbewegung erfassende Einheit (15) eine elektronische Auswerteeinrichtung (10) ist.

## Beschreibung

Die Erfindung betrifft eine Vorrichtung zur statischen automatischen Leuchtweitenregulierung für Kraftfahrzeuge, mit einer Steuereinrichtung zur Ansteuerung mindestens einer Leuchtmittelverstelleinrichtung, wobei die Steuereinrichtung mit zwei als Niveaugeber ausgebildeten Achssensoren und einer eine Fahrbewegung erfassenden Einheit gekoppelt ist, und wobei jeweils ein Niveaugeber einer Vorder- beziehungsweise Hinterachse des Kraftfahrzeugs zugeordnet ist.

### Stand der Technik

Aus der DE-OS 43 38 281 A1 ist eine automatische Leuchtweitenregulierung bekannt. Diese weist ein elektronisches Steuergerät, insbesondere ein Mikrochip, zur Ansteuerung von Scheinwerfer-Stellmotoren zur Einstellung der Leuchtweite und zwei Meßsensoren auf, die der Ermittlung des Niveaus der Fahrzeugachsen relativ zu der Karosserie dienen. Ferner sind dem Steuergerät Schalterkontakte zugeordnet, die an allen Fahrzeugtüren und an der Kofferraumheckklappe angeordnet sind. Die Schalterkontakte dienen dazu, dem Steuergerät anzuzeigen, ob eine Tür oder die Kofferraumheckklappe geöffnet ist. Ist dies der Fall, so werden die Meßsensoren und das Steuergerät aktiviert, die Veränderung des Beladungszustands anhand der Veränderung des Achsenniveaus mit Hilfe der Meßsensoren registriert und im Steuergerät gespeichert. Werden anschließend alle Schalterkontakte, das heißt, sämtliche Türen und die Heckklappe geschlossen, so werden die registierten beziehungsweise gespeicherten Werte an die Scheinwerfer-Stellmotoren weitergegeben, so daß die Leuchtweite an den neuen Beladungszustand angepaßt wird. Anschließend werden die Meßsensoren und das Steuergerät abgeschaltet.

Nachteilig ist hierbei, daß das Steuergerät eine Vielzahl von Signaleingängen benötigt, um alle Signale der Sensoren und Schalterkontakte erfassen zu können. Weiterhin ist nachteilig, daß die Vielzahl der Schalterkontakte einen aufwendigen Einbau der Leuchtweitenregulierung in das Kraftfahrzeug bedingt.

Weiterhin ist es bekannt, die Kontaktschalter durch eine eine Fahrbewegung erfassende Einheit zu ersetzen, die in Form eines Geschwindigkeitssensors ausgeführt ist. Der Sensor dient dazu, dem Steuergerät Informationen über den Bewegungszustand des Fahrzeugs zur Verfügung zu stellen. Der Sensor ermittelt, ob sich das Fahrzeug in einer beschleunigten Bewegung (Geschwindigkeitszunahme oder Abbremsung) befindet. Das Signal des Sensors wird insofern ausgewertet, als daß die Leuchtweitenregulierung nur dann aktiv ist, wenn das Fahrzeug keine beschleunigte Bewegung durchführt. Das heißt, tritt in Folge eines Beschleunigungsvorganges ein veränderter Neigungswinkel des Fahrzeugs um seine Querachse auf, so werden von dem Steuergerät keine Signale zur Verstellung der Leuchtweite generiert.

Auch hierbei ist nachteilig, daß das Steuergerät mehrere Signaleingänge aufweisen muß, um alle Signale der Sensoren (Niveaugeber und Geschwindigskeitssensor) erfaßen zu können. Zusätzlich ist ein Geschwindigkeitssensor erforderlich, so daß auch hier ein erhöhter Materialaufwand zu beobachten ist und die Montage der Leuchtweitenregulierung am Fahrzeug sehr viele Arbeitschritte benötigt.

### Vorteile der Erfindung

Die Erfindung betrifft eine Vorrichtung zur statischen automatischen Leuchtweitenregulierung für Kraftfahrzeuge, mit einer Steuereinrichtung zur Ansteuerung mindestens einer Leuchtmittelverstelleinrichtung, wobei die Steuereinrichtung mit zwei als Niveaugeber ausgebildeten Achssensoren und einer eine Fahrbewegung erfassenden Einheit gekoppelt ist, wobei jeweils ein Niveaugeber einer Vorder beziehungsweise Hinterachse des Kraftfahrzeugs zugeordnet ist, und wobei die die Fahrbewegung erfassende Einheit eine elektronische Auswerteeinrichtung ist.

Die Erfindung mit den Merkmalen des Anspruchs 1 hat den Vorteil, daß mit Hilfe der elektronischen Auswerteeinrichtung in vorteilhafter Weise der Bewegungszustand des Kraftfahrzeugs erfaßt werden kann, ohne daß neben den Achssensoren weitere Sensoren, wie Geschwindigkeitssensoren, oder Schalterkontakte notwendig sind. Die Auswerteeinrichtung erfaßt Fahrbewegungszustände des Kraftfahrzeugs, das heißt erkennt, ob das Fahrzeug beschleunigt, abbremst, mit konstanter Geschwindigkeit fährt oder stillsteht. Dies wird dadurch möglich, daß die Auswerteeinrichtung mit der Steuereinrichtung gekoppelt ist, so daß auch die Auswerteeinrichtung auf die Signale der Niveaugeber, das heißt der Achssensoren zugreifen kann. Die Steuereinrichtung empfängt nämlich Signale der Achssensoren und stellt sie auch der elektronischen Auswerteeinrichtung zur Verfügung. Durch einen Vergleich mit einem Referenzsignal, das der Fahrzeuglage im unbeladenen Zustand zugeordnet ist, kann eindeutig bestimmt werden, ob das Fahrzeug abgebremst oder beschleunigt wird, da beim Beschleunigen die Vorderachse aus- und die Hinterachse einfedert. Während eines Bremsvorgangs verhalten sich die Einfederungszustände der Achsen umgekehrt, das heißt, die Vorderachse federt ein, die Hinterachse federt aus. Diese Niveauänderungen beziehungsweise Veränderung der Achslagen zueinander erkennt die Auswerteeinrichtung und stellt demgemäß in Abhängigkeit der Einfederungszustände der Achsen fest, ob das Fahrzeug beschleunigt oder abgebremst wird. Wird keine Niveauänderung registriert, so kann davon ausgegangen werden, daß das Fahrzeug stillsteht.

Die durch die Auswerteeinrichtung ermittelten Fahrbewegungszustände werden bei der Erzeugung von Ansteuerimpulsen für eine Leuchtmittelverstelleinrichtung berücksichtigt. Das heißt, die Steuereinrichtung aktiviert in Abhängigkeit der Einfederungszustände nur dann die als Stellmotor ausgeführte Leuchtmittelverstelleinrichtung, wenn das Fahrzeug eine weitgehend konstante Achslage aufweist, das heißt stillsteht oder konstante Geschwindigkeit aufweist. Ändert das Fahrzeug aufgrund einer Be- beziehungsweise Entladung seine Achslage und wird demgemäß eine veränderte, aber konstante Achslage registriert, wird vorzugsweise die Leuchtweite reguliert. Die Leuchtweite wird vorzugsweise nicht reguliert, wenn das Fahrzeug aufgrund einer Abbremsung lediglich nur kurz einnickt oder aber aufgrund einer Beschleunigung im vorderen Fahrzeugbereich ausfedert. Mit Hilfe der Auswerteeinrichtung ist es auch möglich, sehr schnelle Einfederungsänderungen zu erfassen, wie sie beispielsweise aufgrund von Fahrbahnunebenheiten entstehen. Auch in solchen Fällen ist es unerwünscht, daß die Leuchtweite lediglich aufgrund von schnell ablaufenden Ein- beziehungsweise Ausfederungsvorgängen verstellt wird.

Ferner ist vorteilhaft, daß auch langsam ablaufende Lageänderungen, wie sie zum Beispiel von einer Benzintankentleerung herrühren, sicher erkannt werden.

Weiterhin ist vorteilhaft, daß bei der Herstellung der Steuereinrichtung, die beispielsweise auf einer Leiterbahnplatine aufgebaut ist, auf Steckkontakte für den Geschwindigkeitssensor oder die Schalterkontakte, wie im Stand der Technik vorgesehen, verzichtet werden kann. Dies führt zu einer Verringerung der Herstellungskosten.

In einer Weiterbildung der Erfindung ist vorgesehen, daß der Auswerteeinrichtung ein elektronischer Speicher zugeordnet ist. Der Speicher umfaßt vorzugsweise einen Lesespeicher (ROM) und einen Schreib-Lesespeicher (RAM). Ferner ist der Auswerteeinrichtung in bevorzugter Ausführungsform ein Rechenwerk zugeordnet. Durch die Kombination aus Auswerteeinrichtung, elektronischem Speicher und Rechenwerk ist es in vorteilhafter Weise möglich, die von den Niveaugebern erfaßten Signale mittels geeigneter Software zu verarbeiten. Dazu ist vorgesehen, daß vorzugsweise im ROM ein Software-Algorithmus abgespeichert ist, der im Rechenwerk abgearbeitet wird, so daß aufgrund des Algorithmus' der Auswerteeinrichtung verschiedene Auswertefunktionen zur Verfügung gestellt werden können. Beispielsweise kann ein Software-Tiefpaßfilter vorgesehen sein. Selbstverständlich können mehrere Software-Filter mit jeweils unterschiedlichen Zeitkonstanten realisiert werden. Vorzugsweise enthält der Algorithmus auch eine Rechenanweisung, wie mehrere Signale der Niveaugeber miteinander verknüpft werden können. Dadurch wird es möglich, einen aktuellen Wert des Fahrzeugniveaus mit einem Referenzsignal zu vergleichen.

Die erfindungsgemäße Vorrichtung sieht in bevorzugter Ausgestaltung ein Software-Tiefpaßfilter und ein Software-Filter mit einer gegenüber dem Tiefpaßfilter längeren Zeitkonstante vor. Dadurch wird es möglich, schnell ablaufende Achslageänderungen des Fahrzeugs zu erkennen, wie sie beispielsweise durch Straßenunebenheiten, Karosserieschaukeln und Bremsen beziehungsweise Beschleunigen hervorgerufen werden. Andererseits können langsam ablaufende Lageänderungen, wie sie beispielsweise von einer Benzintankentleerung herrühren, dennoch sicher erfaßt werden. Auch reagiert das System schnell auf Laständerungen, die aufgrund eines Be- beziehungsweise Entladens hervorgerufen werden.

Es kann also insgesamt festgestellt werden, daß die erfindungsgemäße Vorrichtung zur statischen automatischen Leuchtweitenregulierung die gleiche Qualität bezüglich der Leuchtweitenregulierung aufweist wie die im Stand der Technik bekannten Vorrichtungen, die mit einem Sensor zur Erfassung der Fahrbewegung ausgestattet sind, wobei jedoch vorteilhafterweise kein eigenes Geschwindigkeitssignal und damit verbundene Sensoren, Kabel, Steckerpins etc. benötigt werden. Für die erfindungsgemäße Vorrichtung sind lediglich die an einer Vorder- und einer Hinterachse angeordneten Achssensoren und eine elektronische Auswerteeinrichtung notwendig.

In einer besonders bevorzugten Ausführungsform der Erfindung ist vorgesehen, daß die Steuereinrichtung, die Auswerteeinrichtung, der elektronische Speicher und das Rechenwerk in einem Mikrocomputer ausgebildet sind. Dadurch wird eine besonders kompakte Bauweise erzielt, die zudem auch preisgünstig realisiert werden kann.

Ferner betrifft die Erfindung ein Verfahren zur statischen automatischen Leuchtweitenregulierung für ein Kraftfahrzeug, wobei Signale mindestens zweier, die relative Lage der Kraftfahrzeugachsen zueinander registrierenden Achssensoren einem Steuerteil einer Vorrichtung zu statischen automatischen Leuchtweitenregulierung zugeführt werden, die Signale von einer im Steuerteil vorhandenen elektronischen Auswerteeinrichtung ausgewertet werden, anschließend Impulse von der Auswerteeinrichtung einer ebenfalls im Steuerteil vorhandenen Steuereinrichtung zugeführt werden und wobei diese Impulse zur Ansteuerung einer Leuchtmittelverstelleinrichtung verwendet werden.

Weitere Ausgestaltungen ergeben sich aus den Unteransprüchen.

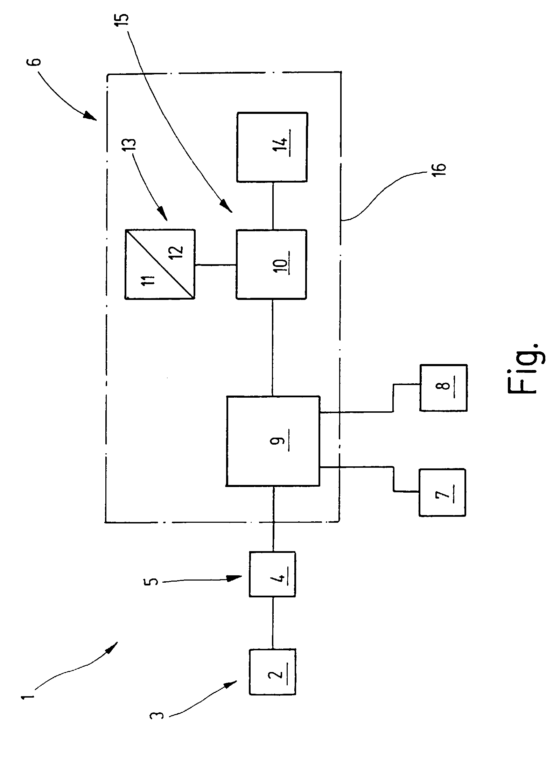

Die Erfindung wird im folgenden anhand eines Ausführungsbeispiels mit Bezug auf die Zeichnung näher erläutert. Die einzige Figur zeigt ein Blockschaltbild einer Vorrichtung zur statischen automatischen Leuchtweitenregulierung für Kraftfahrzeuge.

Die Figur zeigt eine Vorrichtung zur statischen, automatischen Leuchtweitenregulierung, im folgenden kurz SALWR 1 genannt, zur Leuchtweitenverstellung eines Leuchtmittels 2 eines hier nicht näher dargestellten Kraftfahrzeugs, umfassend die Steuereinrichtung 9, die Niveaugeber 7 und 8, die Auswerteeinrichtung 10 sowie vorzugsweise den Speicher 13 und das Rechenwerk 14. Das Leuchtmittel 2 ist vorzugsweise ein Hauptscheinwerfer 3. Zur Verstellung des Leuchtmittels 2 ist eine Leuchtmittelverstelleinrichtung 4 vorgesehen, die vorzugsweise durch einen Stellmotor 5 gebildet wird. Der Stellmotor 5 wird von einem Steuerteil 6 der SALWR 1 zur Verstellung der Leuchtweite der Leuchtmittel 2 angesteuert. Das Steuerteil 6 umfaßt die Steuereinrichtung 9, die Auswerteeinrichtung 10 den einen einen Lesespeicher (ROM) 11 und einen Schreib-Lesespeicher (RAM) 12 umfassenden Speicher 13 und das Rechenwerk 14. Dem Steuerteil 6 sind als Niveaugeber 7 und 8 ausgebildete Achssensoren zugeordnet. Beispielsweise ist der Niveaugeber 7 einer Vorderachse des Kraftfahrzeugs und der Niveaugeber 8 einer Hinterachse zugeordnet.

Im Lesespeicher 11 ist ein Software-Algorithmus gespeichert, der zumindest zwei Software-Filterfunktionen mit unterschiedlicher Zeitkonstante und eine Verknüpfungs-Rechenvorschrift aufweist. Der Algorithmus wird im Rechenwerk 14 abgearbeitet, so daß die Auswerteeinrichtung 10 auf die Ergebnisse des Rechenwerks 14 Zugriff hat. Die Auswerteeinrichtung 10 stellt die die Fahrbewegung erfassende Einheit 15 dar, der vorzugsweise der Speicher 13 und das Rechenwerk 14 zugeordnet sind.

Das Steuerteil 6 ist bevorzugt in einem Mikrocomputer 16 untergebracht, der schematisch in der Figur strichpunktiert dargestellt ist.

Es ergibt sich folgende Funktionsweise:

Für die folgenden Betrachtungen wird davon ausgegangen, daß sich das Fahrzeug zunächst in unbeladenem Zustand und im Stillstand befindet. Im unbeladenen Zustand weist das Kraftfahrzeug einen Neigungswinkel um die Querachse auf, dem die Einfederungs- beziehungsweise Ausfederungsmaße der Federelemente zugeordnet sind. Dieser Neigungswinkel ist vorzugsweise einer Grundstellung des Kraftfahrzeugs zugeordnet. Die zugehörigen Grundwerte sind vorzugsweise im Lesespeicher 11 abgelegt. Erfolgt nun eine Beladung des Fahrzeugs, so ändert sich der Neigungswinkel, wodurch die Achsen des Kraftfahrzeugs eine andere Position gegenüber der Karosserie einnehmen. Diese Positionsänderung wird von den Niveaugebern 7 und 8 sensiert. Vorzugsweise ändern sich aufgrund dieser Positionsänderung die elektrischen oder physikalischen Eigenschaften der Niveaugeber, beispielsweise ändert sich die Kapazität und/oder der elektrische Widerstand. In vorgebbaren Zeitabständen, vorzugsweise 5 bis 20 mal pro Sekunde, werden von der Steuereinrichtung 9 die Signale der Niveaugeber 7 und 8 abgefragt. Auf diese Signale hat auch die Auswerteeinrichtung 10 Zugang, so daß mit Hilfe des Software-Tiefpaßfilters schnelle Achslageänderungen herausgefiltert werden. Diese kurzzeitigen Änderungen werden für eine Ansteuerung der Leuchtmittelverstelleinrichtung 4 nicht verwendet. Selbstverständlich können die Signale der Niveaugeber 7 und 8 auch direkt der Auswerteeinrichtung 10 zugeführt werden. Es werden also nur Signale, die auf langsam ablaufende Lageänderungen beziehungsweise von der Grundposition abweichende Lagepositionen hinweisen, von der Auswerteeinrichtung 10 an die Steuereinrichtung 9 weitergeleitet. Diese Signale werden dann von der Steuereinrichtung 9 in zugeordnete Ansteuerimpulse für die Leuchtmittelverstelleinrichtung 4 umgesetzt. Die Leuchtmittelverstelleinrichtung 4 verstellt dann den Hauptscheinwerfer 3 in die gewünschte Position, so daß die von Gesetzes wegen vorgeschriebene Leuchtweite eingehalten wird.

Wird das beladene Fahrzeug nun in eine Fahrbewegung versetzt, sind die Federelemente des Fahrzeugs ständig aufgrund von Straßenunebenheiten, Karosserieschaukeln, Bremsen und Beschleunigen beansprucht, das heißt, sie unterliegen schnellen Schwingvorgängen, die von den Niveaugebern 7 und 8 erfaßt werden. Diese Signale werden zwar von der Steuereinrichtung 9 zeitkontinuierlich abgefragt und an die Auswerteeinrichtung 10 weitergeleitet. Mit Hilfe der Auswerteeinrichtung 10 werden jedoch derartige schnelle Schwingungen -wie bereits erwähnt- mit Hilfe des Software-Tiefpaßfilters aus den Signalen herausgefiltert, so daß aufgrund dieser schnellen Achslageänderungen keine Ansteuerimpulse für die Leuchtmittelverstelleinrichtung 4 generiert werden. Treten jedoch langsam ablaufende Achslageveränderungen auf, wie sie beispielsweise von der Benzintankentleerung herrühren, so ändert sich relativ langsam der Neigungswinkel des Fahrzeugs, wobei diese Signale von schnellen Lageänderungen überlagert sein können. Dadurch, daß jedoch -wie bereits beschrieben- die Auswerteeinrichtung 10 diese schnellen Signale herausfiltert, generiert die Steuereinrichtung 9 lediglich Ansteuersignale für die Leuchtmittelverstelleinrichtung 4 in Abhängigkeit der langsamen Achslageänderung.

Wird nun ein Zwischenhalt eingelegt, bei dem beispielsweise das Fahrzeug nur teilweise entladen wird, so wird in vorteilhafter Weise diese zwar schnell ablaufende Laständerung von der Auswerteeinrichtung 10 erfaßt. Die Auswerteinrichtung 10 übermittelt jedoch erst dann die Signale der Niveaugeber 7 und 8 an die Steuereinrichtung 9, wenn die Fahrzeuglage stabil ist. Das bedeutet: Erst wenn die Fahrzeuglage einen neuen stabilen Zustand erreicht hat, werden von der Auswerteeinrichtung 10 Signale an die Steuereinrichtung 9 übermittelt. Die Steuereinrichtung 9 gibt dann gemaß der Ladezustandsänderung ein Ansteuersignal beziehungsweise Impuls für die Leuchtmittelverstelleinrichtung 4 aus, so daß das Leuchtmittel 2 auf die gewünschte Leuchtweite eingestellt werden kann. Die Leuchtweite wird ständig in Abhängigkeit der aktuellen stabilen Achslage des Fahrzeugs derart angepaßt, daß die gesetzlich vorgeschriebene Leuchtweite stets eingehalten wird.

Vorzugsweise ist vorgesehen, daß aus den Niveaugebern 7 und 8 ausgelesene Werte im Schreib-Lesespeicher 12 abgespeichert werden, so daß eine Verknüpfung von zumindest zwei Lagesignalen möglich wird.

Dadurch wird erreicht, daß die Auswerteeinrichtung 10 eine Lageänderung zwischen zwei zu unterschiedlichen Zeitpunkten aufgenommenen Lagesignale registrieren kann. Die Auswerteeinrichtung 10 ermittelt daraufhin, ob das Fahrzeug in einer stabilen Lage ist oder ob das Fahrzeug abgebremst oder beschleunigt wird. Ist das Fahrzeug in einer stabilen Lage, erfolgt keine Regulierung der Leuchtweite, wenn diese Fahrzeuglage der eingestellten Leuchtweite zugeordnet ist. Ist dies nicht der Fall, so erfolgt eine Nachregulierung. Ist das Fahrzeug in keiner stabilen Lage, so erkennt die Auswerteeinrichtung 10 durch Vergleich der neuen Werte mit dem im Schreib-Lesespeicher 12 abgelegten Grundwert, ob das Fahrzeug abgebremst oder beschleunigt wird. Ist dies der Fall, so erfolgt keine Nachregulierung der Leuchtweite.

Nach alledem wird deutlich, daß die erfindungsgemäße Vorrichtung zur Leuchtweitenregulierung schnelle Achslageänderungen erkennen und ausfiltern kann, so daß keine Verstellung der Leuchtweite erfolgt; andererseits werden langsam ablaufende Achslageänderungen, beispielsweise durch Benzintankentleerung, und dauerhafte Laständerungen, beispielsweise durch Be- und Entladen, dennoch sicher erkannt, so daß die Leuchtweite auf den gewünschten Wert einreguliert werden kann. Dadurch, daß ein Speicher vorgesehen ist, ist es ohne weiteres möglich, die erfindungsgemäße Leuchtweitenregulierungsvorrichtung für verschiedene Kraftfahrzeugtypen zu verwenden, da die Referenzsignale beziehungsweise Grundwerte und der Algorithmus entsprechend des Fahrzeugtyps leicht angepaßt beziehungsweise programmiert werden können.

## Patentansprüche

1. Verfahren zur statischen automatischen Leuchtweitenregulierung für Kraftfahrzeuge, wobei Signale mindestens zweier, die relative Lage der Kraftfahrzeugachsen zueinander registrierenden Achssensoren einem Steuerteil einer Vorrichtung zur statischen automatischen Leuchtweitenregulierung zugeführt und von einer im Steuerteil vorhandenen elektronischen Auswerteeinrichtung ausgewertet werden, wobei anschließend Impulse von der Auswerteeinrichtung einer Steuereinrichtung zugeführt werden, und diese Impulse zur Ansteuerung wenigstens einer Leuchtmittelverstelleinrichtung verwendet werden, **dadurch gekennzeichnet,** daß die Signale der Achssensoren (7, 9) in einen Speicher (13) eingelesen werden und in einem festlegbaren zeitlichen Abstand die in dem Speicher (13) abgelegten Signale mit von den Achssensoren (7, 9) aktuell gelieferten Signale verglichen werden, und ein Ergebnis dieses Vergleiches die Impulse für die Steuereinrichtung liefert.

2. Verfahren nach Anspruch 1, **dadurch gekennzeichnet,** daß die aktuell gelieferten Signale der Achssensoren (7, 9) jeweils als neue Vergleichssignale in den Speicher (13) eingelesen werden.

3. Verfahren nach einem der vorhergehenden Ansprüche, **dadurch gekennzeichnet,** daß eine Abweichung der im Speicher (13) eingelesenen Signale mit den aktuellen Signalen mittels eines Software-Algorithmus ausgewertet wird.

4. Verfahren nach einem der vorhergehenden Ansprüche, **dadurch gekennzeichnet,** daß der Software-Algorithmus die ermittelte Abweichung mit einem Grundwert (Referenzsignal) vergleicht, und ein Ergebnis dieses Vergleiches die Bereitstellung der Impulse für die Steuereinrichtung beeinflußt.

5. Verfahren nach einem der vorhergehenden Ansprüche, **dadurch gekennzeichnet,** daß die Grundwerte und/oder der Software-Algorithmus kraftfahrzeugabhängig anpaßbar sind.
